# EUROPEAN PATENT APPLICATION

(11) **EP 0 873 029 A1**
(43) Date of publication of application: **21.10.1998**
(21) Application number: 98850052.6
(22) Date of filing: 08.04.1998
(51) Int. Cl.: H04Q 3/00, H04M 3/42

(54) **An SCP interface**

(30) Priority: 09.04.1997 SE 9701319
(71) Applicant: TELEFONAKTIEBOLAGET LM ERICSSON, 126 25 Stockholm (SE)
(72) Inventor: Eriksson, Sten-Ulrik, 652 21 Karlstad (SE)
(74) Representative: Rosenquist, Per Olof

(57) **Abstract**

An intelligent network comprises service switching points (SSP), where the call switching is made and where data relating to calls and signals indicating various events relating to the calls are generated and service control points (SCP) connected to the service switching points (SSP) to receive call data and event signals and for controlling switching points. A service control point (SCP) comprises a service control function (SCF) for executing services, primarily relating to calls, the service function (SCF) comprising in turn predefined building blocks or control types. In order to provide a possibility for customers to send data to an SCP and trigger the execution of a service in a service control point (SCP), servers (server1, server2, ...) owned by the customers and comprising service functions (CSF_1, CSF_2, ...) designed by the customers are connected to the service control point (SCP). When such a service function is executed in a server, it sends data to the service control point through a remotely triggered function (RTF) also residing in the service control point. The service control function (SCF) receives the data and executes the required service using the data. For returning processed data the service control function comprises a remotely triggered procedure building block (RTPROC), which transfers, when it is executed, the data to a data buffer. The function (CSF_1, CSF_2, ...) in the external server then accesses the data buffer through the remotely triggered function (RTF).

## Description

### TECHNICAL FIELD

The present invention relates to adding extra services in the field of intelligent networks.

### BACKGROUND AND STATE OF THE ART

The concept of intelligent networks in the field of telecommunication, as defined in various standards and other documents, comprises as an essential element the separation of the pure switching operations and services associated with a telephone call.

The intelligent network concept allows:
a telecom operator to design its own, unique services or to adapt existing services to specific customer requirements;
that new services are installed requiring an access of only a few control nodes;
centralised administration of services thus improving response times and decreasing the human resource overhead required to run the network;
customer control of some customer-specific data.

Service providers and network providers want to be able to add extra services in the telecom network which they use. For example, in order to interact with a telecom service executed in an SCP today the user have to use DTMF tones for supplying necessary instructions or information for the extra service.

### SUMMARY OF THE INVENTION

It is an object of the present invention to provide an intelligent network having an interface from the exterior to a service control point in the network, the interface providing the possibility to trigger execution of services and to send input data to services.

The problem to be solved by the invention is how to supply information and trigger the execution of telecom services, in the case where the service is not to be triggered by functions executing in a SSP and not by information supplied by means of DTMF signals.

These and other objects are achieved by the invention, the scope of which is defined in the appended claims.

Thus, it is possible for an operator to send data to an SCP and trigger the execution of a service in the SCP using remote procedure calls. In this way existing telecom services can be reused in new services. They can be services which today have an interface to the subscriber using DTMF tones and which the service provider wants to upgrade so that it is possible to access the service from external computers or terminals, i.e. computers or terminals not being a part of the basic telecom network and thus not performing any switching function or switching functions integrated in the network.

A service or network provider can thus develop parts of a telecommunication service outside the SCP and invoke a service in the SCP when required, by using an interface which is simple, non-costly and can easily be used. This makes it possible to quickly develop nodes outside the telecom system which can, when required, invoke telecom services.

Additional objects and advantages of the invention will be set forth in the description which follows, and in part will be obvious from the description, or may be learned by practice of the invention. The objects and advantages of the invention may be realized and obtained by means of the methods, processes, instrumentalities and combinations particularly pointed out in the appended claims.

### BRIEF DESCRIPTION OF THE DRAWINGS

While the novel features of the invention are set forth with particularly in the appended claims, a complete understanding of the invention, both as to organization and content, and of the above and other features thereof may be gained from and the invention will be better appreciated from a consideration of the following detailed description of non-limiting embodiments presented hereinbelow with reference to the accompanying drawings, in which:
Fig. 1 is a block diagram of a simple intelligent network, network,
Fig. 2 is a block diagram illustrating the structure of a service control point having facilities for executing customizable services,
Fig. 3 shows a configuration file for a function assisting in the communication with the external server,
Fig. 4 is a picture illustrating a control type used for receiving calls from an external server, and
Fig. 5 is a representation of the structure of a data module used by a control type used in executing services.

### DESCRIPTION OF A PREFERRED EMBODIMENT

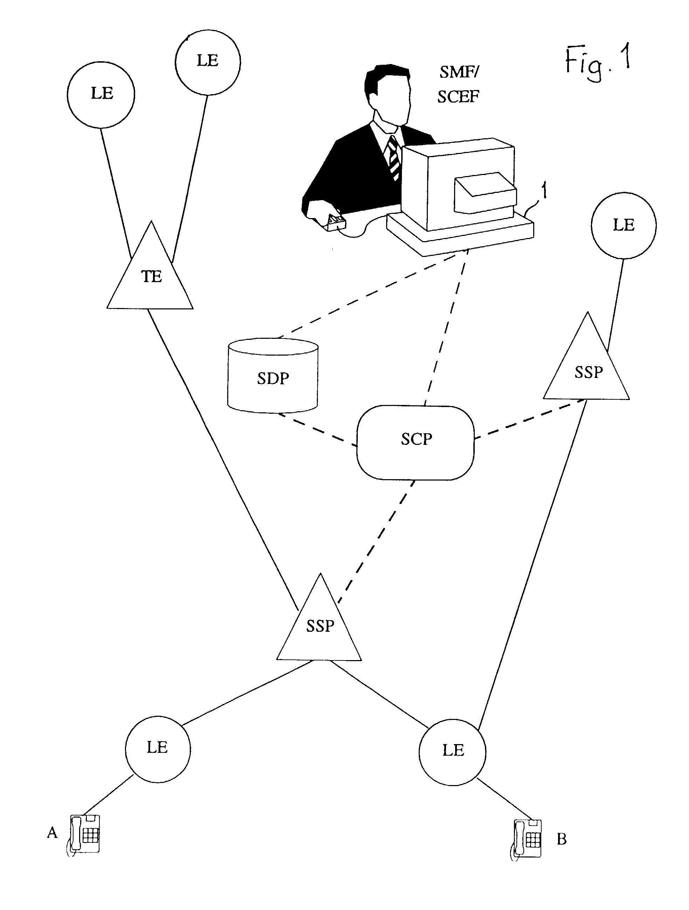

An intelligent network is illustrated in Fig. 1. The components thereof are briefly described below.

A and B are ordinary telephone sets but can also be e.g. modems of computers communicating over the network. LE are local exchanges and TE is a transit exchange. Between the exchanges service switching points, SSPs, may be arranged, which perform the actual switching of telephone and other calls. Each service switching point is associated with and controlled by a service control point, SCP. A single service control point can be associated with several service switching points. A service control point can have access to a service data point, SDP. An administrator can have access to a service control point and its associated service data point through a computer 1 connected to these points.

The lines drawn in full lines can carry speech or voice communication and the dotted lines can only carry non-speech communication.

In the physical "service points" as listed above, one or more service functions can be executed. In a service switching point the functions comprise a service switching function, SSF, and a call control function, CCF. A call control function CCF handles calls and connections to be made or finished in the traditional sense. It is the normal call handling and supervising function of an exchange. It is not a part of the intelligent network itself but provides the intelligent network with information on calls and executes orders as forwarded from the service switching function in the same service switching point.

A service control point is associated with a service control function SCF. A service control function contains the logic operations of a service, i.e. it is essentially the base program being executed for actually making the service. It has a complete responsibility for making decisions related to a call. The service switching function SSF in a SSP is an interface between a service switching function SCF in a SCP connected to this SSP and the CCF in the same SSP as the considered SSF and thus forwards call event information such as on-hook or subscriber busy to the SCF and commands to be executed to the CCF from the SCF.

A service data function SDF is comprised within a service data point SDP and handles real time access to data bases comprising data relating to the network and to calls. It thus functions as an interface between a service control function SCF and the data bases.

A service resource function or specialized resource function SRF provides a pool of interactive resources for access from other network entities, i.e. resources to be used in the intelligent network services. It comprises for example blocks for DTMF-digit reception, announcements, speech recognition. It can be incorporated in an SSF but also in an SCF.

A service management function SMF handles the design and administration of nodes and the services therein. This includes adding or removing data, installing or modifying services, etc. It can be run from a computer connected to an SCP and the SCF therein and also to SDPs for accessing network data. The node where it is incorporated may be called a service management point SMP.

An intelligent network service in an SCF is designed as a combination of a number of predefined control types or service independent blocks, SIBs. All services that can be built are thus limited to the functions which can be obtained by combining these predefined SIBs. A service is defined in a service script listing the control types involved and in particular the involved logic modules and their connections to various data modules.

Another control type or SIB that can be introduced in an intelligent network and that is to be described hereinafter allows the service provider to obtain the results of the conventional services of service control functions SCFs from an external server. This control type or SIB is called a remotely triggered procedure block RTPROC and is used for communicating with a remotely triggered function RTF connected to the SCF which holds the RTPROC. The control type RTPROC thus has a logic module and particular data modules associated therewith. The remotely triggered function RTF handles only the communication with external servers, in which customer supplied functions CSF_1, CSF_2, ... designed by the service designer can make calls to the SCF. Such customer supplied functions CSFs can be designed and modified without changing the SCF and the SMF.

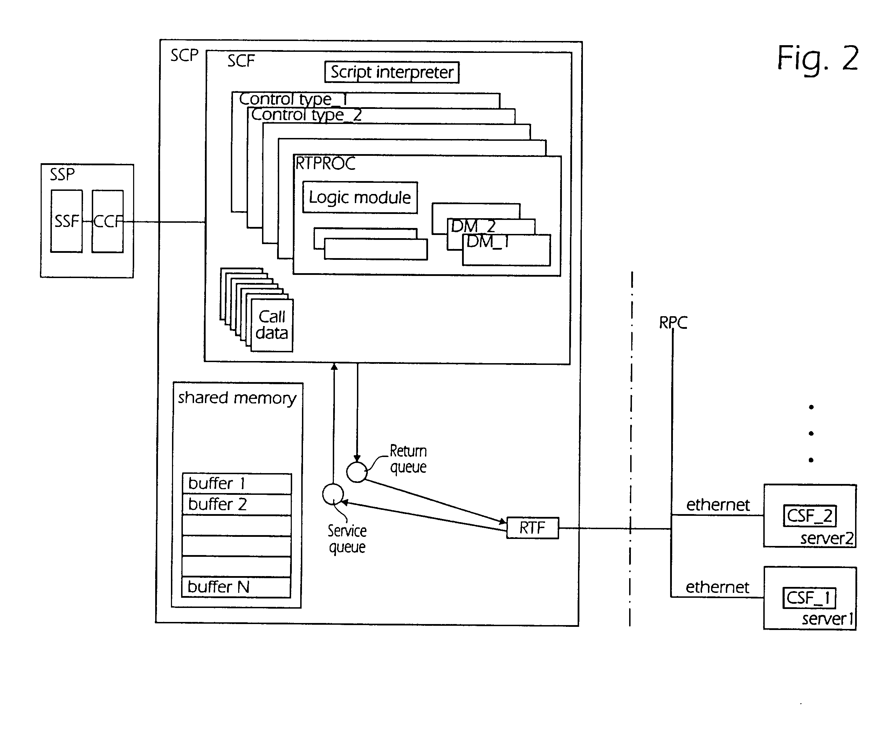

In Fig. 2 the general structure of the components needed for such a customer supplied function is illustrated. An SCF is for example incorporated in a general purpose computer SCP in which also a remotely triggered function RTF is included. The RTF communicates with the SCF through a special protocol or internal interface called RTFI. The RTF communicates with customer supplied functions CSF: CSF_1, CSF_2, ..., each one included in an external server serverl, server2, ..., where the servers serverl, server 2, ... can be separate or the same servers. The protocol or interface for the external communication is made through a remote procedure called an RPC interface. The low-level communication protocol for external communication can e.g. be the Ethernet type. The SCP and the external servers can all be conventional, general purpose computers operating according to a suitable operating system such as UNIX.

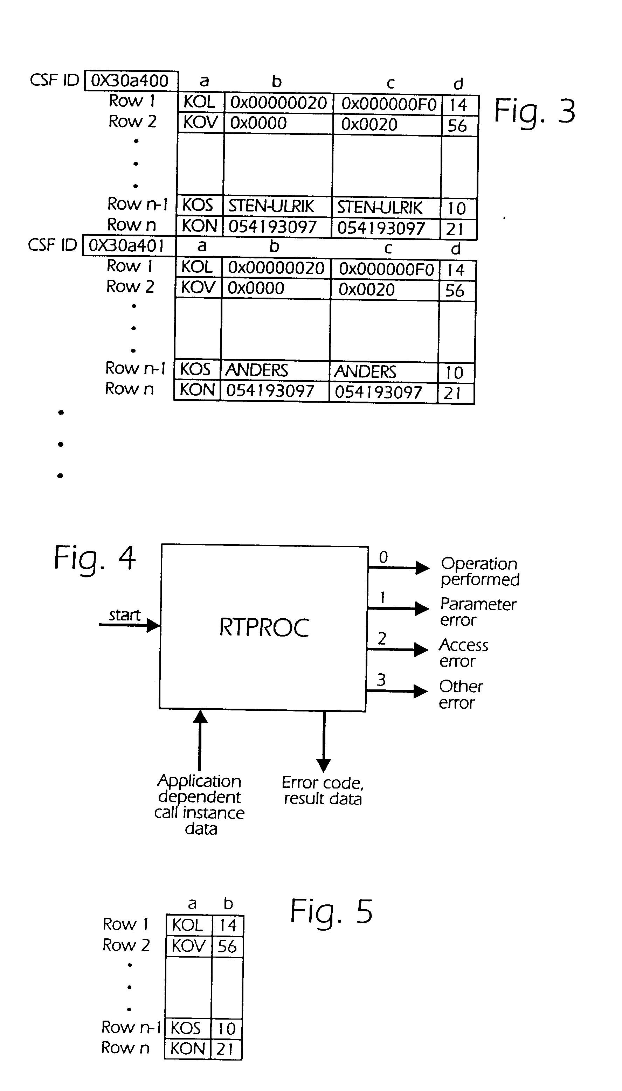

The data flow when a customer supplied function CSF_n, n = 1, 2, ..., is executed in an external server is as follows:
1. The external, customer supplied function CSF_n calls the SCP using the RPC interface. The call contains data, for example call parameter data, user name, user code, to be processed by the SCP. The data can have the same format as data received by the SCP and originating from a connected SSP.
2. The call parameter data of the received data are verified by the RTF. The parameter data are checked for type and range by using a configuration file associated with the CSF_n, see also Fig. 3. Then the data are forwarded to the SCF which will execute the service. The remotely triggered function RTF thus allocates an empty space in a buffer area of a shared memory, places the data in a buffer at the empty space and sends a message to the SCF, the message holding some identifier of the calling CSF_n and the message being placed in a service queue.
3. The main program of the SCF notices the message in the service queue and creates a CallInstance CI, which is a kind of subprogram of the main program. The CallInstance is commanded to take care of the message. CI accesses the service script for the CSF_N, the identifier of this function being obtained from the message. From the service script identifiers and a pointer to a subscriber are obtained, and also the service to be executed, i.e. the sequential order of control types to be executed in the SCF is defined in the script, in particular the logic modules and the data modules to be used thereby. The control type RTPROC is also included among these control types.
4. The service defined by the service script is executed in the SCF by the CI. Thus the logic of the defined logic modules are executed using the specified data modules. First, thus control types having logic modules which produce new or modified parameters are executed. Result codes therefrom are delivered to the control type RTPROC which then creates parameter data in an object and lists result codes from the previous logic modules. It places then the data in the shared memory by first allocating empty space and then storing the data at this space. A message is placed on the return queue belonging to the remotely triggered function RTF, the message holding a pointer to the location of the data buffer.
5. The RTF observes the message in the return queue and then accesses data in the buffer pointed to in the message and sends the parameter data and the result codes to the associated CSF_n using the interface RPC.
6. The CSF receives parameter data and the result codes.

The server: serverl, server2, ... holding the customer supplied function CSF_1, CSF_2, ... respectively can for example be a web server. A person can then from a computer or terminal connect to the web server and then indicate a service which she/he wants. Examples of services comprise alarm for wake-up, banking services, to have a look at her/his telephone bill, etc. The web server provides an order form to be used for indicating the service wanted by the person. The information in regard of the service wanted and associated data are transmitted to the SCP which executes the service using the associated data and then sends a reply comprising a result code indicating the outcome of executing the service. The data transmitted to the SCP comprise in most cases a user identification and an associated PIN code.

As already briefly discussed, the control type RTPROC is processed by the control type logic being executed in the SCF and in particular by a service script interpreter program included therein. When a message from the RTF originating from a respective CSF has been received by the SCF that a service is requested to be started the interpreter program is started and starts the service as specified for this CSF. It also receives data in the buffer in the shared memory. The parameter data are used by the service executed in the SCF for this CSF. After the requested service has been executed, it also processes the control type RTPROC in due order and then data and a message is sent to the RTF containing result parameters and/or error codes reporting on the success/failure of the executed services. These data and error codes are then forwarded from the RTF to the respective CSF in the external server.

The general design of the control type RTPROC is illustrated in Fig. 4. It has four outlets:
0 Operation performed with success
1 Parameter error, i.e. a mandatory parameter was missing in the tag buffer
2 Access error, i.e. it was not possible to connect to the external server or a mandatory return parameter was missing
3 Other error

The arrow associated with the legend "Error codes, result codes" signifies output from the control type used only internally in the SCF.

The main tasks of the SCF are in this application:
1. To receive messages from the RTFs, for example from a service queue in a shared memory, as illustrated in Fig. 2.
2. To prepare received data for use by services, i.e. to unpack the contents of the data buffer in the shared memory.
3. To start services specified for the source of the message what is made by creating and calling a special callback function ("CallbackFunction") in the SCF. Then, the execution of a service script is started that identifies the wanted service and in a message finds a pointer to the subscriber data which are stored for the calling subscriber, who is identified by the user name mentioned above, and for the wanted service. The difference from the conventional procedure, in the case where the wanted service has been triggered through the intelligent network, is that two differently designed callback functions are used and also different service scripts.

The main tasks of the logic functions included in the logic module of the control type RTPROC are:
1. To collect the various parameter data and error codes resulting from the executed services and to prepare them for transmission.
2. To allocate a buffer and place the parameters therein and send a message comprising the error codes and a pointer of the buffer to the RTF to a return queue arranged in a shared memory.

The control type RTPROC uses a data module DM_1, DM_2, ... for specifying the parameters received through the RTF from the customer specified function CSF_1, CSF_2, ... Such a data module DM_1, DM_2, ... is principally organized as is illustrated in Fig. 5. In a practical embodiment is it e.g. possible to specify up to 48 parameters, but of course other numbers of parameters can be used by changing the setup such as by modifying a configuration file. Each one of the thus up to 48 rows of such a data module DM_1, DM_2, ... contains the following items or columns:
a. Parameter number, for customer use. This is an identifier which is administered by the designer of the customer supplied function.
b. Type, indicates the data type of the parameter of the row. KOL or Kind Of Long indicates a 32 integer, KON or Kind Of Number indicates a decimal number, KOS or Kind Of String indicates an alphanumeric string of up to 128 characters, KOV or Kind of Variable indicates a 16 bit integer. Of course, if required or used in the SCP, other parameter types can be defined.
c. KOx_ID. The value of the field Type together with this value indicates a parameter in the call record or call data in the SCF, see Fig. 2.

The interface RTFI between the service control function and the RTF is used by the RTF in indicating a data buffer to the SCF. As has been already discussed, the data buffer is a storage field allocated in a memory in the SCP shared by the SCF and the RTFs. Such a data buffer contains data for a customer supplied function. The data in the buffer has either been obtained from an CSF or is to be transmitted to it.

The interface is implemented as queue connections, a service queue connection being used for messages from the RTF to the SCF and a return queue connection for transmitting messages from the SCF to a customer supplied function CSF_1, CSF_2, ... When thus data have been placed in a new data buffer by the RTF and stored in the shared memory, a message containing an identification of the CSF and a pointer to the stored data is sent from the RTF to the SCF, the service queue being used for the message transmitted to the SCF. In the other case, when data have been placed in a new data buffer by the RTPROC, a message containing a pointer to the memory location of the data buffer is sent to the RTF.

The main tasks of the RTF are:
1. To maintain RPC handles towards the external servers: serverl, server2, ..., where the customer supplied functions CSF_1, CSF_2, ... reside. An RTF can be created in run-time.
2. To receive data from customer supplied functions.
3. To check the data, using the associated configuration file, obtained from the customer supplied function.
4. To create the data buffer and store the data therein and send a message containing a pointer to the storage position to the SCF, in which the control type RTPROC is executed.
5. To wait for a message pointing to parameter data and/or result codes from the SCF.
6. To access data from the data buffer and transmit them to the correct customer supplied function in the correct server.

The data checking operation of the RTF ... is specified in a configuration file. The configuration file can be edited from a terminal connected to the considered SCP and it is principally organized as is illustrated in Fig. 3. In a practical embodiment is it e.g. possible to specify up to 48 parameters for each connected CSF. The file contains first an identification field having an identifier of a CSF connected to the SCP. Then there are a number of rows, each one containing the following items or columns which are valid for the CSF identified in the first field:
a. Type, indicates the data type of the parameter of the row. KOL or Kind Of Long indicates a 32 integer, KON or Kind Of Number indicates a decimal number, KOS or Kind Of String indicates an alphanumeric string of up to 128 characters, KOV or Kind of Variable indicates a 16 bit integer. Of course, if required or used in the SCP, other parameter types can be defined.
b. Lower limit, indicates the smallest allowed value of the parameter of the row.
c. Upper limit, indicates the highest allowed value of the parameter of the row.
d. KOx_ID. The value of the field Type together with this value indicates a parameter.

Then there is a field identifying another connected CSF and then the rows belonging thereto, etc.

The main tasks of a CSF: CSF_1, CSF_2, ... are:
1. To prepare parameters for the services to be executed.
2. To make a call to the SCF and forward the parameters to the RTF.
3. To wait for modified parameters and the result codes indicating the success/failure of the requested services.

While specific embodiments of the invention have been illustrated and described herein, it is realized that numerous additional advantages, modifications and changes will readily occur to those skilled in the art. Therefore, the invention in its broader aspects is not limited to the specific details, representative devices and illustrated examples shown and described herein. Accordingly, various modifications may be made without departing from the spirit or scope of the general inventive concept as defined by the appended claims and their equivalents. It is therefore to be understood that the appended claims are intended to cover all such modifications and changes as fall within a true spirit and scope of the invention.

## Claims

1. An intelligent network comprising switching points, where the actual switching of calls is made and where data relating to calls and event signals indicating various events relating to the calls, including setup, establishment and end of calls, are generated, and service points connected to the switching points for receiving data relating to calls and event signals and for controlling switching points, a service point comprising a service function for processing events relating to calls, for which input data are obtained from the switching points, a service function in turn comprising predefined building blocks, which are combined to constitute services executed for specific events, **characterized by**
a server comprising a function, the server being connected to the components of the network only at a service point,
a service function in the service point arranged to receive data from the function in the server and comprising a remotely triggered procedure building block, the service function being arranged to execute the remotely triggered procedure building block after data has been received from the function in the server and processed by other building blocks in the service function, the remotely triggered procedure building block being then arranged to return data to the function in the server.

2. An intelligent network according to claim 1, **characterized** in that the remotely triggered building block is arranged to include result codes in the data returned to the function in the service, the result codes indicating the result of the execution of the building blocks in the service function.

3. An intelligent network according to any of claims 1 - 2, **characterized by** a remotely triggered function in that service point which contains the service function that holds the remotely triggered procedure building block, the remotely triggered function being arranged to act as an intermediate function between the service function and the function in the server, the remotely triggered procedure function thus accessing data from the function in the server and forwarding them to the service function and for receiving data from the service function and forwarding them to the function in the server.
